# EUROPÄISCHE PATENTSCHRIFT

(11) **EP 2 546 317 B1**
(45) Veröffentlichungstag und Bekanntmachung des Hinweises auf die Patenterteilung: **12.03.2014**
(21) Anmeldenummer: 12172151.8
(22) Anmeldetag: 15.06.2012
(51) Int. Cl.: C09J 7/04, C09J 11/02, H01B 13/012

(54) **Klebeband mit textilem Träger für die Kabelbandagierung**
Adhesive tape with textile holder for cable bandaging
Bande adhésive dotée d'un support textile pour le bandage de câbles

(30) Priorität: 14.07.2011 DE 102011079114
(43) Veröffentlichungstag der Anmeldung: 16.01.2013
(73) Patentinhaber: Tesa SE, 20253 Hamburg (DE)
(72) Erfinder: Siebert, Michael, Dr., 22869 Schenefeld (DE); Auktun, Inga, 22844 Norderstedt (DE)

(56) Entgegenhaltungen:
- DE-A1- 19 623 411
- DE-A1-102008 056 554

## Beschreibung

Die Erfindung betrifft ein Klebeband vorzugsweise zum Umhüllen von langgestrecktem Gut wie insbesondere Leitungen oder Kabelsätze mit einem textilen Träger und mit einer zumindest auf einer Seite des Trägers aufgebrachten vorzugsweise druckempfindlichen Klebebeschichtung. Des Weiteren betrifft die Erfindung die Verwendung des Klebebands sowie ein langgestrecktes Gut wie einen Kabelbaum, das mit dem erfindungsgemäßen Klebeband ummantelt ist, und den textilen Träger selbst.

Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.

Des Weiteren werden Ummantelungen eingesetzt, die aus einer Eindeckung bestehen, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich. Ein derartiges Produkt sowie optimierte Ausführungsformen desselben werden in der EP 1 312 097 A1 offenbart. Dem Fachmann sind diese Ummantelungen unter der Bezeichnung "Sleeve" bekannt.

Die Träger dieser Klebebänder/Sleeves sind zumeist textiler Art und bestehen überwiegend aus PET. Üblicherweise wird dazu schwarz eingefärbtes PET-Gewebe oder PET-Vlies als Träger verwendet.
Im Zuge der zunehmenden Einführung von Hybridautos müssen die Klebebänder/Sleeves nun zusätzlich eine Warnfunktion erfüllen: Alle Kabel beziehungsweise Kabelbündel mit Spannungen größer als 60 V müssen durch einen orangefarbenen Farbton gekennzeichnet werden. Im Laufe des Jahres 2010 wurde hierbei der Farbton RAL 2003 (Pastellorange) als Standardfarbton vorgegeben.

Bisher gibt es keine Lösungen für orangefarbene Klebebänder/Sleeves, die auch bei Temperaturen von 125 °C beziehungsweise 150 °C keine signifikante Farbverblassung nach einer Testdauer von 3000 h aufweisen.
Dies kann in der Praxis zur Folge haben, dass ein Feuerwehrmann beim einem älteren verunfallten Auto gegebenenfalls nicht vor hohe Spannungen tragenden Kabeln durch ein brillantes orangefarbenes Warnsignal geschützt ist.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1A303-aa (Revision 03/2011) "Harness Tape Performance Specification). Im Folgenden werden diese Normen verkürzt mit LV 312 beziehungsweise mit Ford-Spezifikation bezeichnet.

Klebebänder/Sleeves dürfen sich nicht durch den Einfluss von erhöhter Temperatur über längeren Zeitraum verfärben, entfärben oder verblassen. Des Weiteren darf die Kabelisolierung nicht durch den Einfluss des Klebebandes in Kombination mit erhöhter Temperatur über längeren Zeitraum sich verändern oder gar beschädigt werden - eine Kompatibilität mit den Aderisolierungen ist zwingend erforderlich. Die Aderisolierungen dürfen keine Verfärbungen, Risse oder sonstige Beschädigungen aufweisen.

Unterschieden wird hier nach der LV 312 zwischen vier Temperaturklassen T1 bis T4, entsprechend 85 °C (auch Temperaturklasse A genannt), 105 °C (auch Temperaturklasse B (105) genannt), 125 °C (auch Temperaturklasse C genannt) und 150 °C (auch Temperaturklasse D genannt), denen die umwickelten Kabel über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

Aus der EP 1 607 459 B1 ist die Spinndüsenfärbung von PET-textilen Trägern bekannt. Der textile Träger besteht aus spinndüsengefärbten Fäden oder Fasern. Bei der Spinndüsenfärbung wird zunächst ein zur Herstellung von Fasern eingesetztes Polymer aufgeschmolzen. Um eine Spinnmasse zu erzeugen, werden Additive wie Antioxidantien und Farbpigmente zu dem aufgeschmolzenen Polymer zugegeben. Die Spinnmasse, welche zur Herstellung der Fasern verwendet wird, wird direkt eingefärbt. Anschließend wird die Masse mit Hilfe eines Extruders versponnen und zu Garnen oder Stapelfasern weiterverarbeitet. Es wird dort bevorzugt, wenn durch den Einsatz von spinndüsengefärbten Garnen oder Fasern als Trägermaterial des Klebebandes der Farbstoff schon durch den Herstellungsprozess der Fasern selbst derart in die Polymermatrix eingebunden ist, dass es später bei einer Lagerung oder Beanspruchung des Klebebandes bei erhöhten Temperaturen nicht zu einer Entfärbung des textilen Materials oder zu einer Farbstoffmigration kommen kann.
Allerdings gelten die in dieser Anmeldung aufgestellten Behauptungen allgemein nur für schwarze Färbung, da die entsprechenden schwarzen Farbpartikel bei hohen Temperaturen keine Neigung zum Verblassen haben.
Bei spinndüsengefärbten und stabilisierten Fasern tritt ein Verblassen durch Temperatureinwirkung durch Degeneration des Farbpigments/Farbstoffs auf, wenn orangefarbene Partikel (zum Beispiel als Reinorange oder als Mischung aus Rot, Gelb und Reinorange) eingesetzt werden.
Des Weiteren müssen aufgrund des hohen Aufwands beim Rüsten für Spinndüsenfärbung bei einer einzelnen Farbe sehr hohe Losgrößen gefertigt werden, um einen kosteneffizienten Prozess zu erhalten.

Dann sind aktuell im Markt tesa® 51026 orange (stückgefärbt, hell) und tesa® 51026 orange (spinndüsengefärbt, dunkel) erhältlich. Die Träger beider Produkte enthalten Standard-Orange-Pigmente mit Azo-Grundkörpern und weisen eine so hohe Neigung zum Entfärben bei Temperatureinwirkung auf, dass sie nur die Temperarturklasse T2 (105 °C für 3000 h) erfüllen.

Durch Vergleich von Temperaturlagerungen, die zum einen nur für den Träger und zum anderen für den mit Klebmasse beschichteten und auf Aluminium verklebten Träger durchgeführt wurden, kann für beide Färbearten festgestellt werden, dass sowohl hinsichtlich des Verblassens als auch hinsichtlich der Migration kein Unterschied bezüglich der Temperaturbeständigkeit oberhalb von T2 besteht.

Aufgabe der Erfindung ist es, gegenüber dem Stand der Technik eine merkliche Verbesserung zu erzielen und ein Klebeband mit einem gefärbten textilen Träger sowie einen gefärbten textilen Träger bereitzustellen, die auch bei erhöhter Temperatureinwirkung nicht zum Verblassen neigen.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Bands sowie ein mit dem Band ummantelter Kabelbaum vom Erfindungsgedanken umfasst. Des Weiteren liegt ein textiler Träger innerhalb des Erfindungsgedankens.

Demgemäß betrifft die Erfindung ein Klebeband, gemäß Anspruch 1.

Wenn im Folgenden nur von Farbstoffen beziehungsweise Pigmenten die Rede ist, so ist für den Fachmann offensichtlich, dass beides gemeint ist.

Als Anthrachinon-Farbstoffe werden eine umfangreiche Gruppe von sehr lichtechten Farbstoffen verschiedenartiger Konstitution bezeichnet, die sich von Anthrachinon durch Substitution oder durch Ankondensierung weiterer Ringsysteme (zum Beispiel Acridone, Carbazole, Thiazole, Thiophen-Derivate, Azine, kondensierte Ringsysteme und dergleichen) ableiten.

Anthrachinon-Pigmente bezeichnet eine Gruppe von Pigmenten, die sich von der Grundstruktur des Anthrachinons ableiten. Dazu gehören Aminoanthrachinon-Pigmente und Hydroxyanthrachinon-Pigmente sowie heterocyclische und polycarbocyclische Anthrachinon-Pigmente.
Die heterocyclischen Anthrachinon-Pigmente leiten sich formal von Aminoanthrachinon ab. Sie umfassen Anthrapyrimidin-Pigmente, Indanthron-Pigmente und Flavanthron-Pigmente.
Polycarbocyclische Anthrachinon-Pigmente sind höherkondensierte, carbocyclische Chinone, deren einfachster Grundkörper das Anthrachinon ist. Im Einzelnen sind dies Pyranthron-Pigmente, Anthanthron-Pigmente und Isoviolanthron-Pigmente.

Gemäß einer bevorzugten Ausführungsform besteht die Mischung aus gelben und roten Farbstoffen und/oder Pigmenten.

Weiter vorzugsweise basieren der gelbe Farbstoff und/oder das gelbe Pigment auf Anthrachinon und bestehen der rote Farbstoff und/oder das rote Pigment aus einer Azo-Verbindung.

Alle Azofarbstoffe haben die allgemeine Formel R1-N=N-R2, wobei die beiden Reste R1 und R2 identisch oder verschieden sein können.
Enthält das Farbstoffmolekül zwei Azo-Gruppen, so entsteht ein Diazofarbstoff, bei drei Azo-Gruppen ein Trisazofarbstoff usw.
Die Vielzahl der Azofarbstoffe ist auf Einführung von Alkoxy-, Carboxy-, Sulfo-, Nitro-, Alkyl- und Aryl-Gruppen, Halogenen und anderen Substituenten in die Arylazo-Kerne zurückzuführen. Der aromatische Kern besteht dabei nicht nur aus Benzol-Derivaten, sondern auch aus Naphthalin-, Anthracen- sowie heterocyclischen Derivaten.

Des Weiteren können der rote Farbstoff und/oder das rote Pigment eine Mischung von Anthrachinon-Verbindungen und Azo-Verbindungen umfassen.

Als textiler Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.
Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer, ehemals Malimo, bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch die Eindeckung einen sehr geringen Foggingwert.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Als Ausgangsmaterialien für den textilen Träger sind insbesondere (Chemie-) Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des textilen Trägers eingesetzt werden.
Des Weiteren sind Garne, gefertigt aus den angegebenen Fasern, ebenfalls geeignet. Stapelfasern sind Einzelfasern, die in ihrer Länge begrenzt sind. Das Gegenteil von Stapelfasern sind Filamente (Endlosfasern). Alle Naturfasern sind Stapelfasern, da sie nur bis zu einer bestimmten Länge vorkommen. Alle Chemiefasern können zu Stapelfasern geschnitten werden. Im Folgenden werden die Stapelfasern auch vereinfacht nur Fasern genannt.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder aus Fäden aus natürlichen Rohstoffe bestehen.

Der textile Träger besteht vorzugsweise aus einem Vlies aus Stapelfasern und/oder Filamenten. Weiter ist bevorzugt, wenn der textile Träger ein Gewebe ist.

Bevorzugt besteht der textile Träger aus Fasern, Filamenten oder Fäden aus Polyester-, Polypropylen-, Polyethylen- oder Polyamidfasern, insbesondere aus Polyester. Vorzugsweise basieren die Polyesterfasern auf Polyethylenterephthalat (PET) oder Polymilchsäure (PLA).
Eine besonders bevorzugte Ausführungsform umfasst einen textilen Träger auf Vlies-oder auf Gewebebasis, der darüber hinaus aus Polyester-Fasern, -Filamente oder -Fäden besteht.

Die Faserdicke beträgt bevorzugt 1 bis 5 dtex (1 tex: 1 Gramm pro 1.000 Meter), vorzugsweise 1,7 bis 3,6 4 dtex.
Die Faserlänge beträgt bevorzugt 50 bis 100 mm, vorzugsweise 60 bis 85 mm.

Gemäß einer weiteren bevorzugten Ausführungsform der Erfindung liegt das Flächengewicht des textilen Trägers zwischen 30 g/m² und 180 g/m².

Gemäß einer weiteren bevorzugten Ausführungsform der Erfindung erfolgt die Färbung der Fasern, Filamente oder Fäden des textilen Trägers durch eine Dispersionsfärbung. Bei der Dispersionsfärbung werden in Wasser schwer lösliche oder praktisch unlösliche synthetische Farbstoffe eingesetzt. Da die Färbung auch aus einer wässrigen Lösung erfolgt, werden die Farbmittel feinst zermahlen und zusammen mit Dispergiermitteln in ein auf circa 100 °C erwärmtes Färbebad gegeben. Die darin molekular verteilten Farbstoffpartikel ziehen aus der Flotte auf und diffundieren dann in die Faser hinein, wo sie sich lösen und eine feste Verbindung eingehen.
Vorzugsweise sind die Fasern, Filamente oder Fäden des textilen Trägers vollständig von den Farbstoffen und/oder Pigmenten durchdrungen.

Weiter vorzugsweise wird zur Verbesserung des Färbeprozesses ein Hilfsmittel verwendet, das die Durchdringung mit dem Farbstoff verbessert, zum Beispiel Albaflow Uni-01 von Huntsman.
Gleichzeitig können Hilfsmittel verwendet werden, die zu einer gleichmäßigen Färbung führen, zum Beispiel Egalisiermittel wie Univadine Top der Firma Huntsman.
Egalisiermittel fördern die Durchdringung des Färbebades im Textil, verbessern das gleichmäßige Aufziehen und Anfärben und verhindern Farbunegalitäten. Wichtige chemische Komponenten sind zum Beispiel ethoxilierte Fettamine oder Fettalkohole, sulfonierte Öle, Carbonsäureester und quarternierte Ammoniumverbindungen.
Weiter vorzugsweise werden zusätzlich Hilfsmittel verwendet, die die UV-Stabilität erhöhen, zumal dies gleichzeitig zu einer Erhöhung der Temperaturstabilität führt.

Ein Problem bei zur Rolle gewickelten Klebebändern kann die mögliche Migration der Pigmente aus der Faser in die Klebmasse sein.
Um ein temperaturinduziertes Entfärben durch Farbstoff-/Pigmentmigration bei Lagerungen nach den Spezifikationen LV-312 und Ford zu verhindern, sollte die Temperatur bei der Färbung mindestens 135 °C für 60 Minuten, vorzugsweise 135 °C für 90 Minuten betragen.

Um eine Migration der Farbstoffe aus den bevorzugt eingesetzten Faser, Filamenten oder Fäden aus PET (Polyester) zu unterdrücken, ist es angeraten, die zur Färbung eingesetzten Hilfsmittel vom Träger durch Reinigungsprozesse zu entfernen. Genauso, wie diese Mittel unter Temperatur während des Färbeprozesses zu einer besseren Durchdringung der Fasern führen, können sie - wenn sie in der Endanwendung noch auf dem Träger verbleiben - unter Temperatur zu einer beschleunigten Entfärbung der Fasern führen. Die reduktive Reinigung sollte bei einer Temperatur von mindestens 70 °C durchgeführt werden. Vorzugsweise wird bei der Reinigung ein dispersionsfarbstoffaffines Nachreinigungsmittel für Dispersionsfärbungen verwendet. Hierbei handelt es sich insbesondere um Eriopon OS (Firma Huntsman).
Durch derartige Reinigungsmittel werden die nur oberflächlich abgelagerten Farbstoffreste entfernt oder das Reinigungsmittel wechselwirkt mit den an die Fasern angelagerten Farbstoffen. Anionaktive und kationaktive Polymere mit unterschiedlichem Polymerisationsgrad und unterschiedlicher Chemie bringen diese Wirksamkeit.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Das Auftragsgewicht bewegt sich vorzugsweise im Bereich zwischen 15 bis 200 g/m², weiter vorzugsweise 30 bis 120 g/m² (entspricht ungefähr einer Dicke von 15 bis 200 µm, weiter vorzugsweise 30 bis 120 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2009.
Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine Acrylatschmelzhaftklebemasse, wie sie unter der Bezeichnung acResin, insbesondere acResin A 260 UV, von der BASF geführt wird. Diese Klebemasse mit niedrigem K-Wert erhält ihre anwendungsgerechten Eigenschaften durch eine abschließende strahlenchemisch ausgelöste Vernetzung.

Bevorzugt wird der gefärbte PET-Träger mit einer Klebmasse auf Acrylatbasis (Temperaturklasse T4) oder mit einer Klebmasse auf SIS-Basis (Temperaturklasse T3) beschichtet.

Die Klebemasse kann in Längsrichtung des Klebebands in Form eines Streifens aufgebracht sein, der eine geringere Breite aufweist als der Träger des Klebebands.
Der beschichtete Streifen hat in einer vorteilhaften Ausführungsform eine Breite von 10 bis 80 % der Breite des Trägermaterials. Besonders vorzugsweise erfolgt der Einsatz von Streifen mit einer Beschichtung von 20 bis 50 % der Breite des Trägermaterials.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.
Möglich ist auch eine Transferierung der Klebemasse von einem anti-adhäsiven Trägertuch oder Releaseliner auf den Trägerverbund.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein. Gegebenenfalls befindet sich unter dem Rückseitenlack oder alternativ dazu einen Schaumbeschichtung auf der Rückseite des Klebebands.

Erfindungsgemäß ist die einseitig klebend ausgerüstete Variante des Klebebands bevorzugt.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.

Schließlich beschreiben die EP 1 315 781 A1 sowie die DE 103 29 994 A1 Ausführungsformen von Klebebändern, wie sie auch für das erfindungsgemäße Klebeband möglich sind.

Besonders bevorzugt wird bei einem solchen Produkt die nicht mit Klebemasse ausgerüstete Eindeckung aus einem gefärbten textilen Träger hergestellt.

Darüber hinaus schließt die Erfindung auch einen textilen Träger ein, wobei der Träger durch eine Mischung aus Farbstoffen und/oder Pigmenten eingefärbt ist, wobei mindestens einer der Farbstoffe und/oder eines der Pigmente auf Anthrachinon basiert. Dieser textile Träger kann alle vorteilhaften Eigenschaften aufweisen, wie sie im Rahmen dieser Offenbarung für den Träger beschrieben werden, der erfindungsgemäß als Klebebandträger Verwendung findet.

Das erfindungsgemäße Klebeband bieten viele Vorteile, die derartig nicht vorherzusehen waren.

Sofern als Klebemasse ein Acrylat verwendet wird, ist es erstmalig möglich, ein Klebeband mit einem gefärbten Träger für die Ummantelung von Kabelbündeln bereitzustellen, das gemäß der Ford-Spezifikation die Temperaturklasse T4 erfüllt. Bei anderen Klebemassen wie SIS wird immerhin noch die Temperaturklasse T3 erfüllt, ohne dass Verfärbungen zu beobachten sind.
Überraschenderweise hat sich gezeigt, dass bei dem vorgeschlagenen Produktaufbau kein signifikanter Unterschied bei der Temperatur-Entfärbung zwischen nichtbeschichtetem und klebmassebeschichtetem Träger besteht und die Temperaturbeständigkeit eines spinndüsengefärbten Trägers mit Standardpigmenten übersteigt.
Um eine hohe Farbstabilität zu erreichen, ist es nicht notwendig, eine Spinndüsenfärbung (also eine sichergestellte vollständige Durchdringung der Fasern) mit ihren oben geschilderten Nachteilen durchzuführen. Im Vergleich zu Spinndüsenfärbung ist eine kosteneffiziente Fertigung geringer Mengen durch Stückfärbung (zum Beispiel des Gewebeträgers) möglich.

Im Folgenden soll das Klebeband anhand mehrerer Figuren näher erläutert werden, ohne damit eine wie auch immer geartete Einschränkung hervorrufen zu wollen.

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist,
- Figur 3 und Figur 4: die Verwendung des Klebebands nach Figur 1 beziehungsweise den erfindungsgemäßen textilen Träger in einem sleeve-Aufbau.

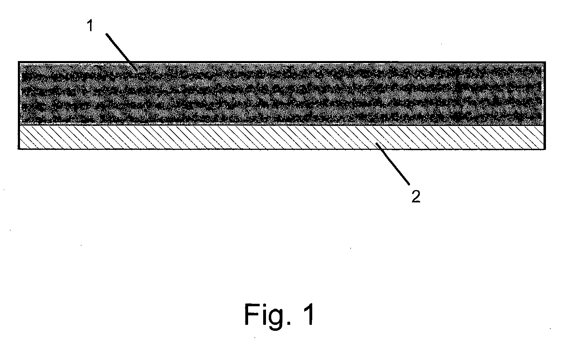

In der Figur 1 ist im Schnitt in Querrichtung (Querschnitt) das Klebeband gezeigt, das aus einem Gewebe 1 besteht, auf den einseitig eine Schicht einer selbstklebenden Beschichtung 2 aufgebracht ist.
Bei dem Gewebe 1 handelt es sich um ein Gewebe aus Polyesterfäden, die mit einem Farbstoff auf Antrachinonbasis orange eingefärbt sind, so dass der Träger den Farbton "orange RAL 2003" aufweist.
Auf den Träger ist eine Acrylatklebemasse 2 (acResin) mit 90 g/m² aufgebracht.

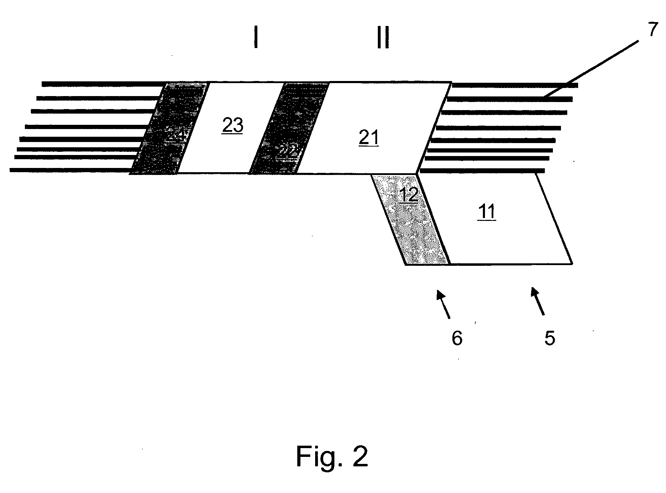

In der Figur 2 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird in einer spiralförmigen Bewegung um den Kabelbaum geführt.
Der gezeigte Ausschnitt des Kabelbaums zeigt zwei Wicklungen I und II des Klebebands. Nach links hin würden sich weitere Wicklungen erstrecken, diese sind hier nicht dargestellt.
Auf der Klebebeschichtung ist ein Streifen 5 der Eindeckung vorhanden, so dass sich ein in Längsrichtung des Bands erstreckender Klebestreifen 6 ergibt. Es wechseln sich nichtklebende Bereiche 11, 21, 23 des Klebebands mit klebenden Bereichen 12, 22, 24 ab. (Die Abschnitte 22, 24 sind im Gegensatz zur offen liegenden Klebemasse 12 von außen nicht sichtbar, weshalb die dichtere Schraffur zur Darstellung gewählt ist.)
Die Ummantelung des Kabelbaums erfolgt derartig, dass der Klebemassestreifen 6 vollständig auf dem Klebeband verklebt. Eine Verklebung mit den Kabeln 7 ist ausgeschlossen.

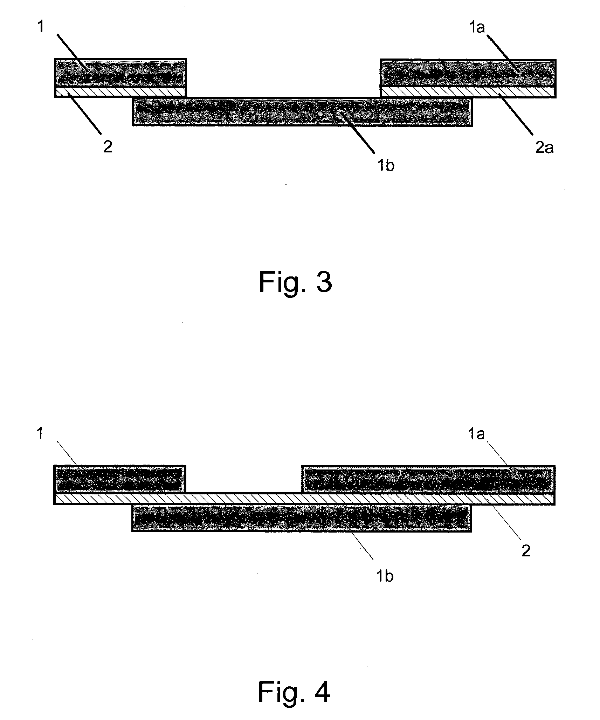

Die Figur 3 zeigt eine Eindeckung 1b aus einem erfindungsgemäß orange eingefärbten textilen Träger auf Gewebebasis. Auf der Oberseite der Eindeckung 1b sind jeweils im Kantenbereich zwei Klebebänder derart aufgebracht, dass die Klebebänder die Kante der Eindeckung 1b überlappen. Die Klebebänder bestehen jeweils aus einem orange eingefärbten Gewebeträger 1, 1a, auf die jeweils eine Acrylatklebemasse 2, 2a mit 90 g/m² aufgebracht sind. Die textilen Träger 1, 1a und 1 b weisen alle den Farbton "orange RAL 2003" auf.
Diese sleeve-Variante wird nicht in einer schraubenlinienförmigen Bewegung um das einzuschlagende Gut (bevorzugt Kabelbaum) geführt, sondern wird in Form einer archimedischen Spirale um das Gut geführt, schlägt das Gut also in einer einfachen kreisförmigen Bewegung ein.

Die Figur 4 zeigt eine Variante des Aufbaus aus der Figur 3. Diese besteht aus einer Eindeckung 1b aus einem erfindungsgemäß orange eingefärbten textilen Träger auf Gewebebasis. Auf der Oberseite der Eindeckung 1 b sind jeweils im Kantenbereich zwei textile Träger 1, 1a derart aufgebracht, dass die textilen Träger die Kante der Eindeckung 1b überlappen. Die Träger bestehen jeweils aus einem orange eingefärbten Gewebeträger 1, 1a.
Die Unterseiten der Gewebeträger 1, 1a sind vollflächig mit einer Klebemasseschicht 2 auf Acrylatbasis (90 g/m²) ausgerüstet. Diese Klebemasseschicht 2 erstreckt sich weiterhin auf der Oberseite der Eindeckung 1b, die nicht von den textilen Trägern 1, 1a abgedeckt ist, so dass sich eine einzige geschlossene Klebemasseschicht 2 ergibt.
Die textilen Träger 1, 1a und 1 b weisen alle Farbton "orange RAL 2003" auf.

Diese sleeve-Variante wird ebenfalls wie die obere verwendet.

Im Folgenden wird die Erfindung anhand von Beispielen näher erläutert, ohne auch hiermit dieselbe in irgendeiner Art und Weise einschränken zu wollen.

### Färberezeptur für alle Muster: (pH-Wert 4-5)

0,5 g/L ALBAFLOW UNI-01 (Huntsman), Penetrationsbeschleunigungs-, und Entlüftungsmittel, Formulierung auf Basis von nichtionischen Tensiden
1,0 g/L UNIVADINE TOP (Huntsman), Egalisier-, Dispergier- und Migriermittel, Mischung aus Komplexphosphatester und Polyalkylenpolyol
2,0 g/L ALBATEX AB-45, Säurepuffer ,Mischung aus Salzen und organischen Säuren *X Gew.-% TERATOP dyes*

### Reduktionsmittel:

4,0 mL NaOH 36 °Bé (Be ist Grad Baumé)
2,0 g/L Hydrosulfit konz..
1,0 g/L ERIOPON OS (Huntsman) Dispersionsfarbstoffaffines Nachreinigungsmittel für Dispersionsfärbungen, Zubereitung auf Basis ethoxilierter Fettsäure-Derivate
20 min bei 70 °C
Spülen und neutralisieren mit Essigsäure

### Färbeprozess:

Beginn bei 70 bis 80 °C
   --> mit 2 °C/min heizen auf 135 °C
   --> Temperatur halten für 45 Minuten
   --> warm und kalt spülen, reduzieren

Die Muster wurden im Umluftofen entsprechend den Anforderungen aus der LV 312 für die unterschiedlichen Temperaturklassen gelagert und danach optisch begutachtet. Die Temperaturklasse gilt als nur bestanden, wenn noch vollständiger Lagerung mit dem bloßen Auge bei Tageslicht keine Farbveränderungen zwischen gelagertem und Referenzmuster im direktren Vergleich durch Nebeneinanderlegen sichtbar ist. Eine Farbveränderung ist beispielsweise Hellerwerden des Trägers (siehe auch Punkt 5.2 der LV 312).
Im Folgenden wird die "bestandene" Temperaturklasse angegeben.
%-Angaben sind Gew.-%.

### Gegenbeispiel 1:

X = 0,7 % TERASIL Orange GL (Azo-Grundkörper)
→ Temperaturklasse T2

### Gegenbeispiel 2

X = 2,7 % TERASIL Orange GL (Azo-Grundkörper)
**→ Temperaturklasse T2**

### Beispiel 3:

X = 2,457 % TERATOP Yellow HL-RS 200% Orange GL (Anthrachinon-Grundkörper) + 0,243 % Red HL-R-01 (Mischung Azo- und Anthrachinon-Grundkörper)
**→ Temperaturklasse T3**

### Beispiel 4:

X = 2,538 % TERATOP Yellow HL-RS 200% Orange GL (Anthrachinon-Grundkörper) + 0,162 % Red HL-S (Azo-Grundkörper)
**→ Temperaturklasse T3**,
Das Beispiel 4 zeigt eine wesentlich bessere Beständigkeit bei T4 als das Beispiel 3, es ist bei T4 nur ein geringfügiges Entfärben zu beobachten.

## Patentansprüche

1. Klebeband, bestehend aus einem textilen Träger und aus einer auf mindestens einer Seite des Trägers aufgebrachten Klebeschicht, wobei der Träger durch eine Mischung aus Farbstoffen und/oder Pigmenten eingefärbt ist,
**dadurch gekennzeichnet, dass**
die Mischung aus gelben und roten Farbstoffen und/oder Pigmenten besteht,
der gelbe Farbstoff und/oder das gelbe Pigment auf Anthrachinon basiert und der rote Farbstoff und/oder das rote Pigment aus einer Azo-Verbindung besteht oder
der gelbe Farbstoff und/oder das gelbe Pigment auf Anthrachinon basiert und der rote Farbstoff und/oder das rote Pigment eine Mischung von Anthrachinon-Verbindungen und Azo-Verbindungen umfasst.

2. Klebeband nach Anspruch 1,
**dadurch gekennzeichnet, dass**
die Fasern, Filamente des textilen Trägers vollständig von den Farbstoffen und/oder Pigmenten durchdrungen sind.

3. Klebeband nach Anspruch 1 oder 2,
**dadurch gekennzeichnet, dass**
der Träger zumindest teilweise aus Polyester-, Polypropylen-, Polyethylen- oder Polyamidfasern besteht, insbesondere aus Polyester.

4. Klebeband nach zumindest einem der Ansprüche 1 bis 3,
**dadurch gekennzeichnet, dass**
das Flächengewicht des textilen Trägers zwischen 30 g/m² und 180 g/m² liegt.

5. Klebeband nach zumindest einem der vorherigen Ansprüche,
**dadurch gekennzeichnet, dass**
es sich bei der Kleberbeschichtung um eine Klebmasse auf Basis Naturkautschuk, Synthesekautschuk, Acrylat, vorzugsweise eine Acrylatschmelzhaftklebemasse, oder Silikon handelt, insbesondere um Synthesekautschuk oder Acrylat.

6. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

7. Verwendung eines Klebebandes nach zumindest einem der vorherigen Ansprüche zum Ummanteln von langgestrecktem Gut, wobei das langgestreckte Gut in axialer Richtung von dem Band umhüllt wird.

## Claims

1. Adhesive tape consisting of a textile carrier and of an adhesive layer applied to at least one side of the carrier, the carrier being coloured with a mixture of dyes and/or pigments
**characterized in that**
the mixture consists of yellow and red dyes and/or pigments,
the yellow dye and/or the yellow pigment is based on anthraquinone and the red dye and/or the red pigment consists of an azo compound, or
the yellow dye and/or the yellow pigment is based on anthraquinone and the red dye and/or the red pigment comprises a mixture of anthraquinone compounds and azo compounds.

2. Adhesive tape according to Claim 1,
**characterized in that**
the fibres, filaments of the textile carrier are completely penetrated by the dyes and/or pigments.

3. Adhesive tape according to Claim 1 or 2,
**characterized in that**
the carrier consists at least partly of polyester fibres, polypropylene fibres, polyethylene fibres or polyamide fibres, more particularly of polyester.

4. Adhesive tape according to at least one of Claims 1 to 3,
**characterized in that**
the basis weight of the textile carrier is between 30 g/m² and 180 g/m².

5. Adhesive tape according to at least one of the preceding claims,
**characterized in that**
the coating of adhesive comprises an adhesive based on natural rubber, synthetic rubber, acrylate, preferably a pressure-sensitive acrylate hotmelt adhesive, or silicone, more particularly synthetic rubber or acrylate.

6. Use of an adhesive tape according to at least one of the preceding claims for jacketing elongate product, the adhesive tape being guided in a helical line around the elongate product.

7. Use of an adhesive tape according to at least one of the preceding claims for jacketing elongate product, the elongate product being enveloped in the axial direction by the tape.

## Revendications

1. Bande adhésive constituée par un support textile et une couche adhésive appliquée sur au moins une face du support, le support étant coloré par un mélange de colorants et/ou de pigments, **caractérisée en ce que** le mélange est constitué de colorants et/ou de pigments jaunes et rouges ; le colorant jaune et/ou le pigment jaune est à base d'anthraquinone et le colorant rouge et/ou le pigment rouge est constitué par un composé de type azo ; ou le colorant jaune et/ou le pigment jaune est à base d'anthraquinone et le colorant rouge et/ou le pigment rouge comprend un mélange de composés de type anthraquinone et de composés de type azo.

2. Bande adhésive selon la revendication 1, **caractérisée en ce que** les fibres, les filaments du support textile sont complètement imprégnés par les colorants et/ou les pigments.

3. Bande adhésive selon la revendication 1 ou 2, **caractérisée en ce que** le support est au moins partiellement constitué de fibres de polyester, de polypropylène, de polyéthylène ou de polyamide, en particulier de polyester.

4. Bande adhésive selon au moins l'une quelconque des revendications 1 à 3, **caractérisée en ce que** le poids surfacique du support textile est situé entre 30 g/m² et 180 g/m².

5. Bande adhésive selon au moins l'une quelconque des revendications précédentes, **caractérisée en ce qu'**il s'agit, pour le revêtement adhésif, d'une masse adhésive à base de caoutchouc naturel, de caoutchouc de synthèse, d'acrylate, de préférence d'une masse autoadhésive fusible à base d'acrylate, ou de silicone, en particulier de caoutchouc de synthèse ou d'acrylate.

6. Utilisation d'une bande adhésive selon au moins l'une quelconque des revendications précédentes pour enrober un produit allongé, la bande adhésive étant guidée le long d'une ligne en hélice autour du produit allongé.

7. Utilisation d'une bande adhésive selon au moins l'une quelconque des revendications précédentes pour enrober un produit allongé, le produit allongé étant enrobé dans le sens axial par la bande.
